# EUROPÄISCHE PATENTANMELDUNG

(11) **EP 4 047 227 A1**
(43) Veröffentlichungstag der Anmeldung: **24.08.2022**
(21) Anmeldenummer: 21158134.3
(22) Anmeldetag: 19.02.2021
(51) Int. Cl.: F16C 17/04, F16C 17/10, F16C 33/10

(54) **WELLENANORDNUNG, GETRIEBE, INDUSTRIE-APPLIKATION UND COMPUTERPROGRAMMPRODUKT**

(71) Anmelder: Flender GmbH, 46395 Bocholt (DE)
(72) Erfinder: Prusak, Robert, 45891 Gelsenkirchen (DE); Schlegel, Eugen, 46117 Oberhausen (DE)
(74) Vertreter: Michalski Hüttermann & Partner Patentanwälte mbB

(57) **Zusammenfassung**

Die Erfindung betrifft eine Wellenanordnung (30), die eine Welle (10) umfasst, die durch ein Axialgleitlager (22) mit einer Lagerkomponente (21) abgestützt ist. Die Lagerkomponente (21) weist bogenförmige Keilflächen (24) auf, an denen jeweils in einem radial äußeren Bereich und/oder einem radial inneren Bereich ein Dichtsteg (28) ausgebildet ist. Erfindungsgemäß ist die Welle (10) als Welle (10) eines Getriebes (40) einer Industrie-Applikation (50) ausgebildet. Die Erfindung betrifft auch ein Getriebe (40), das über eine entsprechende Wellenanordnung (30) verfügt. Gleichermaßen betrifft die Erfindung eine Industrie-Applikation (50), die mit einem korrespondierenden Getriebe (40) ausgestattet ist. Ferner betrifft die Erfindung ein Computerprogrammprodukt (60), mit dem ein Betriebsverhalten einer solchen Wellenanordnung (30) simulierbar ist.

## Beschreibung

Die Erfindung betrifft eine Wellenanordnung, die unter anderem in einem Getriebe einsetzbar ist. Das Getriebe wiederum ist in einer Industrie-Applikation verwendbar. Des Weiteren betrifft die Erfindung ein Computerprogrammprodukt, das zu einem Simulieren eines Betriebsverhaltens einer derartigen Wellenanordnung ausgebildet ist.

Aus dem Dokument EP 0 840 027 A2 ist ein Axialgleitlager bekannt, das für die Verwendung in Turboladern vorgesehen ist und eine Komponente mit einer segmentierten Kreisringfläche aufweist. Darauf sind Schmierölnuten ausgebildet, an denen angrenzend eine Keilfläche ausgebildet ist. Angrenzend an die Keilflächen wiederum sind Rastflächen ausgebildet. Die Keilflächen werden radial außen durch einen Dichtsteg begrenzt.

Die Druckschrift DD 49 087 A1 offenbart ein Axialgleitlager, das zur Aufnahme großer Umfangsgeschwindigkeiten, insbesondere zum Einsatz in einer Turbomaschine, vorgesehen ist. Das Axialgleitlager umfasst einen Spurring, an dem Schleuderkammern ausgebildet sind, die an einem äußeren Durchmesser von einem Kammersteg verschlossen sind.

Aus der Internationalen Anmeldung WO 2005/003577 A1 ist ein Axialgleitlager bekannt, das in einem Abgasturbolader eingesetzt wird. Das Axialgleitlager weist eine Gleitebene auf, die durch eine Rastfläche gebildet wird und die über eine angrenzende Keilfläche mit Schmieröl versorgt wird. Im Bereich der Keilfläche ist ein außenliegender Dichtsteg ausgebildet.

Gleitgelagerte Wellen werden in einer Vielzahl an Anwendungen eingesetzt, in denen eine langlebige und gleichzeitig hochbeanspruchbare Lagerung gefordert ist. Es wird angestrebt, Wellen drehbar zu lagern, die steigenden mechanischen Beanspruchungen unterworfen sind, insbesondere erhöhten Radial- und Axialkräften. Ebenso werden steigende Kühlleistungen für entsprechende Lagerungen gefordert. Diese Anforderung besteht beispielsweise im Gebiet der Getriebetechnik für Industrie-Applikationen. Der Erfindung liegt die Aufgabenstellung zugrunde, eine Wellenanordnung bereitzustellen, die in zumindest einem der skizzierten Aspekte eine Verbesserung bietet.

Die Aufgabenstellung wird durch eine erfindungsgemäße Wellenanordnung gelöst. Die Wellenanordnung umfasst eine Welle, die durch ein Axialgleitlager abgestützt ist. Die Welle ist im Axialgleitlager um eine Drehachse drehbar aufgenommen. Das Axialgleitlager umfasst eine Lagerkomponente, die eine Mehrzahl an im Wesentlichen bogenförmigen Keilflächen aufweist. Die Keilflächen sind in Umfangsrichtung ansteigend ausgebildet und gehen in im Wesentlichen ebene Rastflächen über. Die Keilflächen weisen einen radial äußeren Bereich und einen radial inneren Bereich auf, der diese begrenzt. An den Keilflächen ist je Keilfläche ein Dichtsteg im radial äußeren Bereich und/oder im radial inneren Bereich ausgebildet. Im bestimmungsgemäßen Betrieb des Axialgleitlagers wird an zumindest einer der Keilflächen ein Schmierstoff zugeführt und zu den Rastflächen geleitet, so dass durch den Schmierstoff ein Schmierstofffilm ausgebildet wird. Durch die Dichtstege wird jeweils ein Austreten von Schmierstoff in eine radial äußere Richtung und/oder radial innere Richtung vermindert oder verhindert. Erfindungsgemäß ist die Welle, die drehbar in der Wellenanordnung aufgenommen ist, als Welle eines Getriebes einer Industrie-Applikation ausgebildet. Die Welle ist dementsprechend für deutlich niedrigere Drehzahlen geeignet als eine Welle in einer Turbomaschine, beispielsweise in einem Abgasturbolader. Infolgedessen tritt im bestimmungsgemäßen Betrieb eine reduzierte Schleuderwirkung auf den Schmierstoff ein. Die Erfindung beruht unter anderem auf der überraschenden Erkenntnis, dass ein solches Axialgleitlager auch bei deutlich niedrigeren Drehzahlen als in Turbomaschinen eine vorteilhafte Lagerung bietet. Durch den Dichtsteg ist im bestimmungsgemäßen Betrieb ein reduziertes Austreten von Schmierstoff erreichbar. Dies wiederum erlaubt es, im Axialgleitlager im bestimmungsgemäßen Betrieb einen erhöhten Schmierstoffdruck einzustellen ohne übermäßige Schmierstoffverluste in Kauf zu nehmen. Dementsprechend ist ein gesteigerter Schmierstoffdurchsatz im Axialgleitlager einstellbar, der eine gesteigerte Kühlwirkung bietet. Dadurch werden die mechanische Beanspruchbarkeit des Axialgleitlagers und dessen Zuverlässigkeit gesteigert. Die Lagerkomponente ist gleichermaßen einfach und kosteneffizient herstellbar. Gleichzeitig ist das beanspruchte Axialgleitlager kompakt und damit auch in existierenden Getrieben, insbesondere in Industrie-Applikationen, nachrüstbar.

In einer Ausführungsform der beanspruchten Wellenanordnung weist die Welle eine Nenndrehzahl von bis zu 2000 U/min auf. Die Schleuderwirkung auf den Schmierstoff im Axialgleitlager ist dadurch wesentlich niedriger. Dementsprechend wird ein reduzierter dynamischer Druck im Schmierstoff hervorgerufen. Bei gleichbleibendem Gesamtdruck ist folglich ein erhöhter statischer Druck im Axialgleitlager einstellbar. Der Gesamtdruck wiederum ist maßgeblich für Schmierstoffverluste am Axialgleitlager. Die beanspruchte Lösung überwindet daher das bisherige Vorurteil in der Fachwelt, wonach die erhöhten Drehzahlen in Turbomaschinen, teilweise von über 10.000 U/min oder über 100.000 U/min, erforderlich seien um die technische Wirkung von Dichtstegen zu nutzen.

Des Weiteren kann das Axialgleitlager als Radial-Axialgleitlager ausgebildet sein, das zu einem Aufnehmen von Axialkräften und Radialkräften geeignet ist. Das Radial-Axialgleitlager ist dabei als eine Kombination des Axialgleitlagers mit einem geeigneten Radialgleitlager ausgebildet. Das Axialgleitlager und das Radialgleitlager können dabei zumindest eine gemeinsame Lagerkomponente aufweisen. Die beanspruchte Wellenanordnung bietet eine kompakte Lösung, die auch in bestehende Radial-Axialgleitlager integrierbar ist.

Darüber hinaus kann die Industrie-Applikation, zu der das Getriebe mit der im Axialgleitlager drehbar gelagerten Welle gehört, als eine Mühle, insbesondere als Vertikalmühle ausgebildet sein. Mühlen weisen Wellen mit im Vergleich zu Turbomaschinen niedrigen Drehzahlen auf, über die erhöhte Drehmomente transportierbar sind und die erhöhten Axialkräften unterworfen sind. Dementsprechend können in Mühlen erhöhte mechanische Beanspruchungen vorliegen, die durch das Axialgleitlager aufzunehmen sind. Die oben skizzierten technischen Vorzüge kommen in einer Welle in einer Mühle, insbesondere einer Vertikalmühle, besonders zum Tragen. Des Weiteren kann die Industrie-Applikation auch ein Extruder, ein Kran, ein Bagger oder eine Band-Applikation sein.

Ferner kann das Axialgleitlager als hydrostatisches Gleitlager oder als hydrodynamisches Gleitlager ausgebildet sein. Alternativ kann das Axialgleitlager auch drehzahlabhängig zu einem hydrostatischen oder hydrodynamischen Betrieb geeignet ausgebildet sein. Je niedriger die vorliegende Drehzahl der Welle ist, umso verschleißärmer ist der Betrieb eines hydrostatischen Gleitlagers. Je höher wiederum die Drehzahl der Welle ist, umso verschleißärmer und tragfähiger ist dieses im Betrieb und kann umso einfacher als hydrodynamisches Gleitlager ausgebildet sein.

Des Weiteren kann die Welle als eine horizontal ausgerichtete Antriebswelle des Getriebes ausgebildet sein. Derartige Antriebswellen können durch eine Schrägverzahnung oder Hypoidverzahnung erhöhten Axialkräften unterworfen sein. Die beanspruchte Wellenanordnung bietet somit eine besonders vorteilhafte Lagerung für derartige Antriebswellen. Alternativ kann die Welle als eine vertikale Antriebswelle einer Planetenstufe des Getriebes ausgebildet sein. Weiter alternativ kann die Welle eine Antriebswelle einer Kegelradstufe oder einer Stirnradstufe des Getriebes sein. Das Axialgleitlager wird dabei vorrangig durch das Eigengewicht der vertikalen Antriebswelle beansprucht. Infolge der erhöhten Beanspruchbarkeit bietet die beanspruchte Wellenanordnung eine dauerhaft zuverlässige Lagerung für eine solche Welle.

In der beanspruchten Wellenanordnung der Lagerkomponente ferner der Schmierstoff mit einem Schmierstoffdruck von mindestens 1,0 bar zugeführt werden. Ein solcher Schmierstoffdruck bietet einen erhöhten Schmierstoffdurchsatz. Insbesondere wird eine gesteigerte Fließgeschwindigkeit des Schmierstoffs erreicht, so dass eine erhöhte Kühlwirkung durch den Schmierstoff eintritt. Dies wiederum ermöglicht eine erhöhte mechanische Beanspruchung der Wellenanordnung. Durch die gesteigerte Dichtwirkung werden so Schmierstoffdrücke besser nutzbar, die bei Axialgleitlagern gemäß dem Stand der Technik zu Schaumbildung des Schmierstoffs führen. Die beanspruchte Wellenanordnung erlaubt es dadurch, den eingesetzten Schmierstoff insbesondere thermisch stärker auszunutzen.

Darüber hinaus kann die beanspruchte Wellenanordnung eine gesteigerte Wärmegrenzleistung aufweisen. Unter der Wärmegrenzleistung ist der maximale Wärmestrom zu verstehen, den die Wellenanordnung abzugeben imstande ist. In einem stationären Betrieb steht ein Wärmeeintrag, der sich auf der mechanischen Beanspruchung der Wellenanordnung ergibt, im Gleichgewicht mit einer Wärmeabfuhr, die vorrangig durch Abfuhr von erwärmtem Schmierstoff erzielt wird. Die beanspruchte Wellenanordnung weist folglich gegenüber Lösungen gemäß dem Stand der Technik eine gesteigerte Wärmegrenzleistung auf.

In einer weiteren Ausführungsform der beanspruchten Wellenanordnung ist die Lagerkomponente beidseitig mit bogenförmigen Keilflächen versehen, an denen je Seite in einem radial äußeren Bereich und/oder einem radial inneren Bereich ein Dichtsteg ausgebildet ist. Dadurch ist die Lagerwirkung des Axialgleitlagers steigerbar. Insbesondere sind die beiden Seiten der Lagerkomponente mit unterschiedlich ausgestalteten Keilflächen versehen sein. Zur Ausgestaltung der Keilflächen kann dabei ein Keilwinkel, eine Keillänge in Umfangsrichtung und/oder eine Rastflächenlänge entlang der Umfangsrichtung gehören. Infolgedessen ist auf den gegenüberliegenden Seiten der Lagerkomponente unterschiedliche Lagereigenschaften einstellbar. Insbesondere sind die jeweiligen Seiten jeweils für einen optimierten Betrieb bei einer Auslegungsdrehzahl der Welle ausgelegt werden. Beispielsweise kann eine erste Seite für den Betrieb bei einer ersten Auslegungsdrehzahl ausgelegt sein, die niedriger ist als eine zweite Auslegungsdrehzahl. Für einen optimierten Betrieb bei der zweiten Auslegungsdrehzahl ist wiederum die zweite Seite der Lagerkomponente ausgebildet. Dazu weist zumindest eine der Keilflächen auf der ersten Seite einen höheren Keilwinkel auf als zumindest eine der Keilflächen auf der zweiten Seite.

Ferner kann die Lagerkomponente in der beanspruchten Wellenanordnung als stationäre oder rotierende Lagerkomponente ausgebildet sein. In einer stationären Lagerkomponente ist in einfacher Weise eine Zufuhrnut ausbildbar, über die Schmierstoff mit einem einstellbaren Schmierstoffdruck zuführbar ist. Eine rotierende Lagerkomponente wiederum ist in einfacher Weise austauschbar und dadurch wartungsfreundlich. Alternativ kann die Lagerkomponente mit den Dichtstegen auch als Schwimmscheibe ausgebildet sein, die zwischen der stationären und der rotierenden Lagerkomponente angeordnet ist. Ein Schwimmscheibe ist in einfacher Weise auf beiden Seiten mit unterschiedlichen Keilflächen, Rastflächen und/oder Dichtstegen herstellbar. Dadurch ist das Betriebsverhalten der Wellenanordnung präzise an auswählbare Auslegungsdrehzahlen der Welle anpassbar. Die beanspruchte Lösung ist infolgedessen an ein breites denkbares Einsatzspektrum anpassbar.

Die zugrundeliegende Aufgabenstellung wird ebenso durch ein erfindungsgemäßes Getriebe gelöst. Das Getriebe weist zumindest eine Planetenstufe auf, die über eine antreibende Sonnenwelle verfügt. Das Getriebe ist somit als Planetengetriebe ausgebildet, das auch weitere Arten von Getriebestufen aufweisen kann, beispielsweise Stirnradstufen. Die Sonnenwelle ist als drehbare Welle in einer Wellenanordnung aufgenommen und wird durch diese zumindest axial gelagert.

Erfindungsgemäß ist die Wellenanordnung nach einer der oben dargestellten Ausführungsformen ausgebildet.

Gleichermaßen wird die oben skizzierte Aufgabe durch eine erfindungsgemäße Industrie-Applikation ausgebildet. Die Industrie-Applikation umfasst eine Antriebseinheit, über die eine Antriebsleistung bereitstellbar ist, die zum Antreiben einer Abtriebseinheit dient. Die Abtriebseinheit gehört ebenfalls zur Industrie-Applikation und stellt eine mechanische Anwendung dar, durch die die Art der Industrie-Applikation charakterisiert ist. Die Antriebseinheit kann als Elektromotor, Verbrennungsmotor oder Hydraulikmotor ausgebildet sein. Die Antriebseinheit ist mit einem Getriebe drehmomentübertragend verbunden, so dass die Antriebsleistung zum Getriebe geführt wird. Das Getriebe ist dazu ausgebildet, unter Änderung von Drehmoment und Drehzahl die Antriebsleistung der Abtriebseinheit durch eine drehmomentübertragende Verbindung zur Verfügung zu stellen. Die Abtriebseinheit ist derart ausgebildet sein, dass die Industrie-Applikation eine Mühle, eine Vertikalmühle, eine Zuckermühle oder eine Zementmühle sein kann.

Die Aufgabenstellung wird ebenso durch ein erfindungsgemäßes Computerprogrammprodukt gelöst. Das Computerprogrammprodukt ist dazu ausgebildet, ein Betriebsverhalten einer Wellenanordnung zu simulieren, die in einem Getriebe in einer Industrie-Applikation eingesetzt werden kann. Dazu ist die Wellenanordnung in ihrem Aufbau im Computerprogrammprodukt abgebildet und weist als Ganzes und/oder komponentenweise einstellbare Eigenschaften auf, die für das Betriebsverhalten relevant sind. Dazu können beispielsweise eine Angabe über einen Werkstoff, ein E-Modul, eine Steifigkeit, eine Anisotropie-Angabe, und/oder eine thermische Charakteristik gehören, beispielsweise ein Wärmeausdehnungsverhalten. Ebenso kann eine Angabe über ein thermisches oder rheologisches Verhalten eines Schmierstoffs, ein Schmierstoffdruck, eine Fließgeschwindigkeit des Schmierstoffs, und/oder eine Viskositätscharakteristik des Schmierstoffs gehören. Das Computerprogrammprodukt kann ein Physik-Modell umfassen, mit dem das Betriebsverhalten der Wellenanordnung unter Berücksichtigung der einstellbaren Eigenschaften nachstellbar ist. Zu einem Einstellen der Eigenschaften kann das Computerprogrammprodukt über eine Datenschnittstelle verfügen, über die die Eigenschaften durch eine Benutzereingabe und/oder eine Eingabe aus einem weiteren simulationsgerichteten Computerprogrammprodukt einstellbar ist. Gleichermaßen ist über die Datenschnittstelle eine Angabe zum vorliegenden Betriebszustand vorgebbar, beispielsweise vorliegende Axialkräfte, Radialkräfte, Kippmomente, und/oder Drehzahlen der Welle in der Wellenanordnung. Die Wellenanordnung ist erfindungsgemäß nach einer der oben skizzierten Ausführungsformen ausgebildet und kann in einem oben dargestellten Getriebe eingesetzt werden. Zum Betriebsverhalten der Wellenanordnung kann eine örtlich aufgelöste Schmierstofffilmdicke, eine örtlich aufgelöste Schmierstofftemperatur, ein Schmierstoffverlust, eine vorliegende mechanische Beanspruchung, und/oder ein Verschleißbeitrag gemäß einem Schädigungsmodell gehören. Das simulierte Betriebsverhalten ist über eine weitere Datenschnittstelle des Computerprogrammprodukt an einen Benutzer und/oder ein weiteres simulationsgerichtetes Computerprogrammprodukt ausgebbar. Mittels des erfindungsgemäßen Computerprogrammprodukts ist eine Wellenanordnung für die Verwendung in einem Getriebe und/oder einer Industrie-Applikation per Simulation optimierbar. Ebenso ist ein Betrieb einer existierenden Wellenanordnung simulierbar. Durch die Simulation sind Messdaten, die von Sensoren an der existierenden Wellenanordnung ausgegeben werden, auf Plausibilität prüfbar. Beispielsweise ist dadurch ein defekter Sensor detektierbar. Das Computerprogrammprodukt kann dazu beispielsweise als sogenannter Digitaler Zwilling ausgebildet sein. Derartige Digitale Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Wellenanordnung im Längsschnitt;
- FIG 2: schematisch die erste Ausführungsform der beanspruchten Wellenanordnung in einer stirnseitigen Detailansicht;
- FIG 3: schematisch eine zweite Ausführungsform der beanspruchten Wellenanordnung in einer stirnseitigen Detailansicht;
- FIG 4: schematisch eine dritte Ausführungsform der beanspruchten Wellenanordnung in einer Schnittansicht;
- FIG 5: schematisch eine Ausführungsform der beanspruchten Industrie-Applikation in einem Längsschnitt.

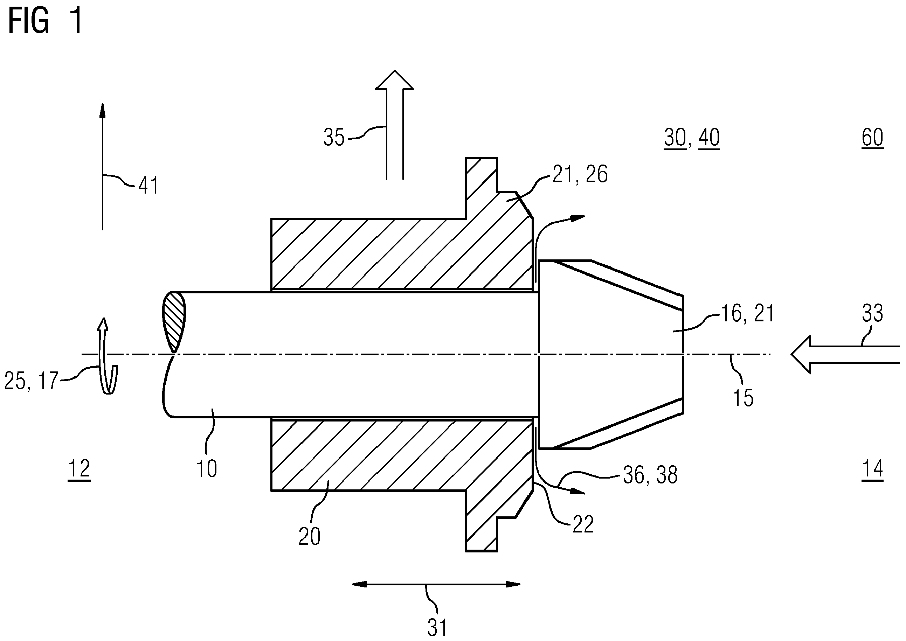

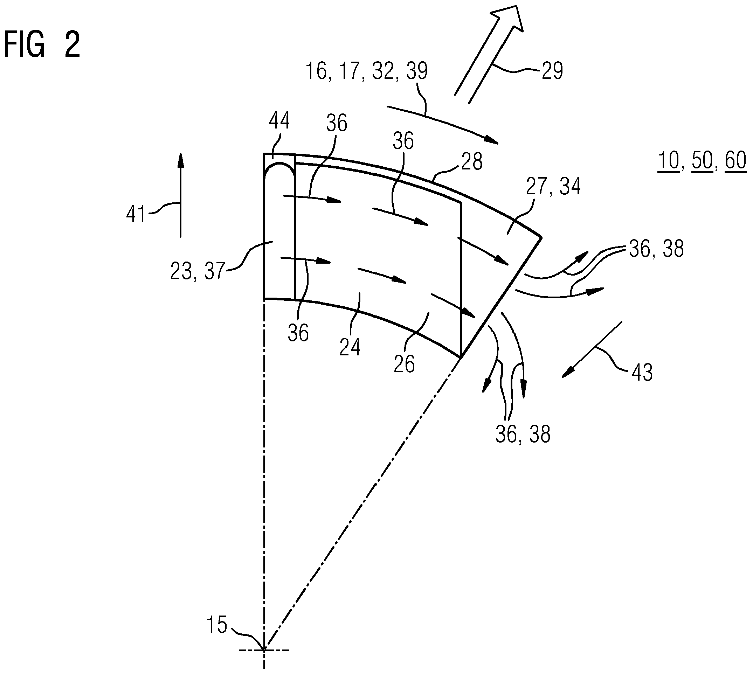

In FIG 1 ist schematisch eine erste Ausführungsform der beanspruchten Wellenanordnung 30 in einem Längsschnitt. Die Wellenanordnung 30 umfasst eine Welle 10, die drehbar in einem Lager 20 aufgenommen ist, das Lagerkomponenten 21 umfasst. Das Lager 20 ist als Axialgleitlager 22 ausgebildet und umfasst als solches eine stationäre Lagerkomponente 26. Das Axialgleitlager 22 ist dazu geeignet, eine auf die Welle 10 entlang einer Axialrichtung 31 einwirkende Axialkraft 33 aufzunehmen. Die Welle 10 gehört zu einem nicht näher dargestellten Getriebe 40 und dient als rotierende Lagerkomponente 16. Das Lager 20 ist weiter als Radial-Axialgleitlager ausgebildet und als solches dazu geeignet, auch Radialkräfte 35 aufzunehmen, die auf die Welle 10 einwirken. Die Welle 10 ist dazu ausgebildet, eine Antriebsleistung 25, die eine Drehzahl 17 der Welle 10 um eine Drehachse 15 hervorruft, von einer Antriebsseite 12 zu einer Abtriebsseite 14 zu transportieren. Zum Betrieb des Axialgleitlagers 22 wird ein Schmierstoff 36 zugeführt, der im Wesentlichen in eine äußere Radialrichtung 41 als Schmierstoffverlust 38 austritt. Die Wellenanordnung 30 nach FIG 1 ist in einem Computerprogrammprodukt 60 abgebildet, das dazu eingerichtet ist, deren Betriebsverhalten zu simulieren. Die Ausführungsform der Wellenanordnung 30 nach FIG 1 ist in FIG 2 näher skizziert.

Die erste Ausführungsform der beanspruchten Wellenanordnung 30 ist in FIG 2 in einer stirnseitigen Ansicht auf die stationäre Lagerkomponente 26 dargestellt. FIG 2 zeigt eine Ansicht auf die stationäre Lagerkomponente 26 mit Blickrichtung von der Abtriebsseite 14 zur Antriebsseite 12 hin. Die stationäre Lagerkomponente 26, also eine der Lagerkomponente 21, ist entlang einer Umfangsrichtung 39 umlaufend ausgebildet und umfasst mindestens eine Keilfläche 24. Die Keilfläche 24 bildet in Umfangsrichtung 39 im Wesentlichen eine Rampenform aus, durch die Schmierstoff 36 förderbar ist. Die stationäre Lagerkomponente 26 verfügt über zumindest eine Schmierstoffzufuhröffnung 23, durch die der Schmierstoff 36 mit einem Schmierstoffdruck 37 im Betrieb gefördert wird. Der an der Schmierstoffzufuhröffnung 23 austretende Schmierstoff 36 wird im Betrieb durch eine Drehbewegung 32 der rotierenden Lagerkomponente 16 entlang der Keilfläche 24 zu einer Rastfläche 27 gefördert. An der Rastfläche 27 wird durch den Schmierstoff 36 ein Schmierstofffilm 34 ausgebildet. Durch den Schmierstofffilm 34 wiederum wird die auf die stationäre Lagerkomponente 26 einwirkende Axialkraft 33 im Wesentlichen abgestützt, also aufgenommen. Die Förderwirkung durch die Drehbewegung der rotierenden Lagerkomponente 16 ist dabei abhängig von ihrer Drehzahl 17 um die Drehachse 15. Der Schmierstoff 36, der den Schmierstofffilm 34 ausbildet, tritt im Bereich der Rastfläche 27 als Schmierstoffverlust 38 sowohl in eine innere Radialrichtung 43 als auch in eine äußere Radialrichtung 41 aus. Ferner nimmt der Schmierstoff 36 auf dem Weg von der Schmierstoffzufuhröffnung 23 zur Rastfläche 27 Wärme auf. Durch das Austreten in Form von Schmierstoffverlust 38 wird ein Wärmestrom 29 zur Kühlung des Lagers 20 hervorgerufen. Der Schmierstoffverlust 38 ist zumindest teilweise sammelbar und in ein nicht näher gezeigtes Schmierstoffsystem zur Wiederverwendung rückführbar.

In einem radial äußeren Bereich ist die Keilfläche 24 durch einen Dichtsteg 28 begrenzt. Der Dichtsteg 28 stellt im Wesentlichen eine Erhebung aus der Zeichenebene von FIG 2 heraus dar. Der Dichtsteg 28 verbindet eine Wandung 44 im Bereich der Schmierstoffzufuhröffnung 23 mit der Rastfläche 28. An der Keilfläche 24 wird durch den Dichtsteg 28 ein Austreten von Schmierstoff 36 in eine äußere Radialrichtung 41 zumindest minimiert. Der über die Schmierstoffzufuhröffnung 23 zugeführte Schmierstoff 36 wird folglich gezielt zur Rastfläche 28 gelenkt, um dort zum Bilden des Schmierstofffilms 34 zu dienen. Dies resultiert in einer gesteigerten Benetzung der Rastfläche 27 mit Schmierstoff 36, so dass über einen gesteigerten Volumenstrom entlang der Keilfläche 24 und Rastfläche 28 ein gesteigerter Wärmestrom 29 zur Kühlung der stationären Lagerkomponente 26 erzielt wird. Die Ausführungsform nach FIG 1 bietet bereits bei einer Drehzahl 17 der rotierenden Komponente 16, die typisch ist für Industrie-Applikationen 50, also deutlich niedriger als in Turbomaschinen, insbesondere Turbolader, eine erhöhte Kühlwirkung und im Bereich der Rastfläche 27 eine gesteigerte mechanische Beanspruchbarkeit gegen Axialkräfte 33. Insbesondere ist durch die Dichtwirkung des Dichtstegs 28 ein erhöhter Schmierstoffdruck 37 einstellbar, wodurch sich ebenfalls eine gesteigerte mechanische Beanspruchbarkeit des Schmierstofffilms 36 an der Rastfläche 27 ergibt. Die Ausführungsform nach FIG 1 weist auch bei erhöhtem Schmierstoffdruck 37 und relativ niedriger Drehzahl 17 eine verbesserte Tragfähigkeit, insbesondere gegen Axialkräfte 33, auf und ist in einfacher Weise herstellbar. Die in FIG 2 gezeigte Detailansicht ist im Umfangsrichtung 39 wiederholbar, so dass die stationäre Lagerkomponente 26 mehrere analog ausgebildete Keilflächen 24, Rastflächen 27, Schmierstoffzufuhröffnungen 23 und Dichtstege 28 aufweist. Ferner ist die Lösung nach FIG 2 kompakt und kann auch durch einen Nachrüstsatz bei einem bestehenden Axialgleitlager 22 implementiert werden. Das Fließverhalten des Schmierstoffs 36 gehört zu einem Betriebsverhalten der Wellenanordnung 30, das mittels eines Computerprogrammprodukts 60 simulierbar ist.

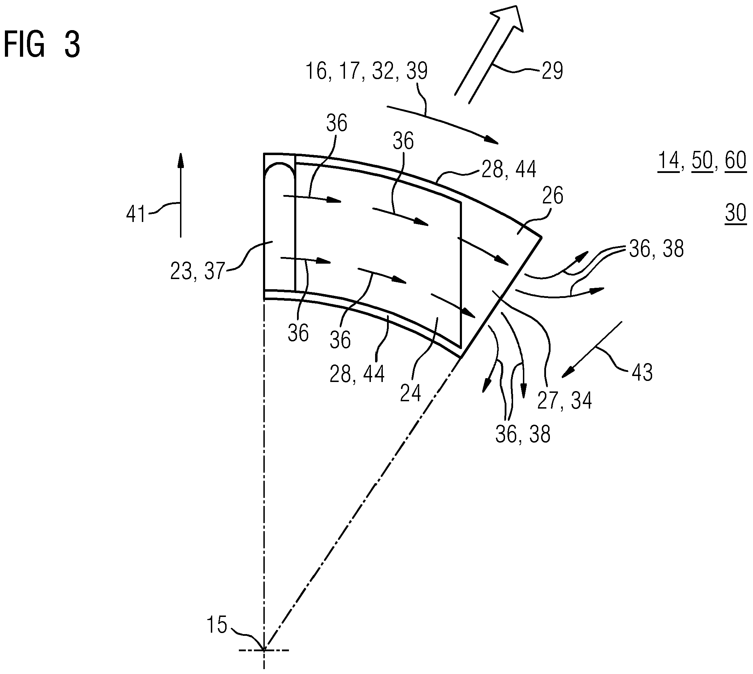

Eine zweite Ausführungsform der beanspruchten Wellenanordnung 30 ist in FIG 3 in einer stirnseitigen Ansicht von einer Abtriebsseite 14 her analog zu FIG 2 dargestellt. Die stationäre Lagerkomponente 36 verfügt über zumindest eine Keilfläche 24, über die ein Schmierstoff 36, der über eine Schmierstoffzufuhröffnung 23 mit einem Schmierstoffdruck 37 zuführbar ist, zu einer Rastfläche 27 führbar ist. Dazu wird der Schmierstoff 36 durch eine Drehbewegung 32 einer rotierenden Lagerkomponente 16 und eine Drehachse 15 mit einer Drehzahl 17 entlang der Keilfläche geführt. Der auf die Rastfläche 27 geförderte Schmierstoff 36 dient dort zum Ausbilden eines Schmierstofffilms 34, über den eine Axialkraft 33 aufnehmbar ist. Der Schmierstoff 36 tritt an der Rastfläche 27 in eine innere Radialrichtung 43 und in eine äußere Radialrichtung 41 als Schmierstoffverlust 38 aus. Der Schmierstoffverlust 38 ist zumindest teilweise sammelbar und in ein nicht näher gezeigtes Schmierstoffsystem rückführbar. An der Keilfläche 24 ist in einem radial äußeren Bereich und in einem radial inneren Bereich jeweils ein Dichtsteg 28 ausgebildet. Die Dichtstege 28 stellen im Wesentlichen jeweils eine Wandung 44 dar, die sich aus der Zeichenebene von FIG 3 heraus erstrecken. Durch die Dichtstege 28 wird ein Austreten von Schmierstoff 36 im Bereich der Keilfläche 24 zumindest reduziert. Analog zur Ausführungsform nach FIG 2 wird durch das reduzierte Austreten von Schmierstoff 36 an der Keilfläche 24 der Schmierstoff 36 länger an der stationären Lagerkomponente 26 gehalten. Daraus ergibt sich ein gesteigerter Wärmestrom 29 aus der stationären Lagerkomponente 26, also dem Lager 20, über den Schmierstoff 36. Durch den Dichtsteg 28 im radial inneren Bereich der stationären Lagerkomponente 26 werden die prinzipiell gleichen technischen Vorzüge wie in der Ausführungsform nach FIG 2 erzielt, jedoch in gesteigertem Umfang. Die Wellenanordnung 30 nach FIG 3 ist gleichermaßen in einem nicht näher gezeigten Getriebe 50 einsetzbar. Das Betriebsverhalten der Wellenanordnung 30 gemäß FIG 3 ist durch ein Computerprogrammprodukt 60 simulierbar, in dem hierzu ein Abbild der Wellenanordnung 30 hinterlegt ist.

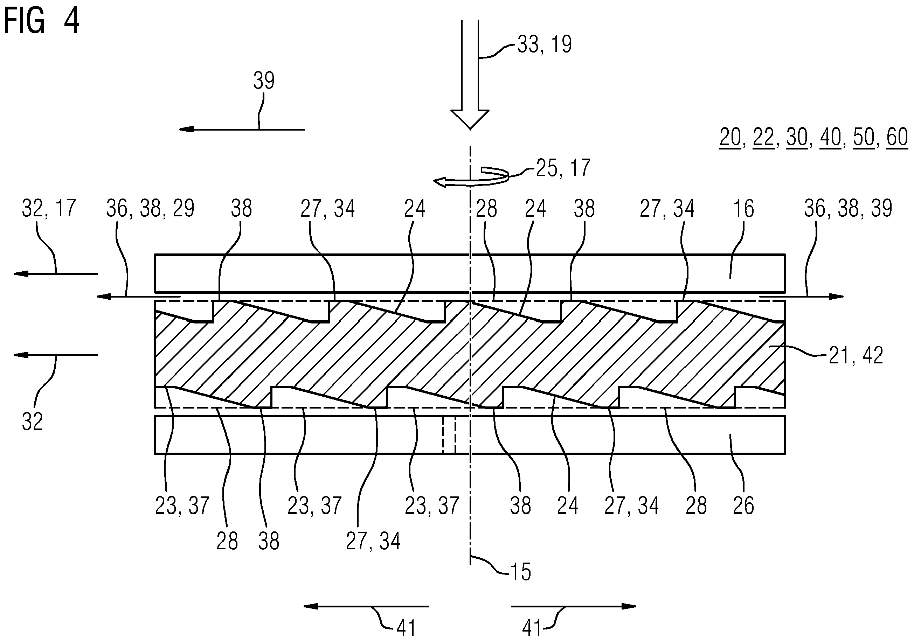

In FIG 4 ist eine dritte Ausführungsform der beanspruchten Wellenanordnung 30 in einer Schnittdarstellung gezeigt. Die Wellenanordnung 30 umfasst eine stationäre Lagerkomponente 26, der gegenüberliegend eine rotierende Lagerkomponente 16 angeordnet ist, die zu einem Lager 20 gehören. Das Lager 20 ist im Betrieb durch eine Axialkraft 33 beansprucht. Der rotierenden Lagerkomponente 16 wird eine Antriebsleistung 25 zugeführt, durch die eine Drehbewegung 32 der rotierenden Lagerkomponente 16 mit einer Drehzahl 17 um eine Drehachse 15 hervorgerufen wird. Zwischen der rotierenden Lagerkomponente 16 und der stationären Lagerkomponente 26 ist eine Lagerkomponente 21 angeordnet, die als Schwimmscheibe 42 ausgebildet ist. Zwischen der Schwimmscheibe 42 und jeweils der rotierenden Lagerkomponente 16 und der stationären Lagerkomponente 26 ist im Betrieb ein Schmierstoff 36 eingebracht, der auf beiden Seiten der Schwimmscheibe 42 zumindest abschnittsweise einen Schmierstofffilm 34 ausbildet. Der Schmierstofffilm 34 wird jeweils im Bereich von Rastflächen 27 ausgebildet, die auf beiden Seiten der Schwimmscheibe 42 ausgebildet sind. An der stationären Lagerkomponente 26 sind Schmierstoffzufuhröffnungen 23 ausgebildet, über die der Schmierstoff 36 mit einem Schmierstoffdruck 37 zuführbar ist. Der Schmierstoff 36 wird über Keilflächen 24, die auf beiden Seiten der Schwimmscheibe 42 ausgebildet sind, zu den Rastflächen 27 geführt, wo jeweils der Schmierstofffilm 34 im Betrieb ausgebildet wird. Die Schwimmscheibe 42 ist schwimmend im Lager 20 aufgenommen, so dass sind infolge der Viskosität des Schmierstoffs 36 und der Drehzahl 17 der rotierenden Lagerkomponente 16 auf eine Drehbewegung 32 der Schwimmscheibe 42 hervorgerufen wird. Die Drehbewegung 32 der Schwimmscheibe 42 ist dabei langsamer als die Drehbewegung 32 der rotierenden Lagerkomponente 16 und gleichsinnig. Im Bereich der Keilflächen 24 sind zumindest in einem radial äußeren Bereich Dichtstege 28 ausgebildet, durch die ein Austreten von Schmierstoff 36 in eine äußere Radialrichtung 41 zumindest minimiert ist. Die Schwimmscheibe 42 bietet durch die beidseitigen Rastflächen 27 eine erhöhte Oberfläche, an der ein Schmierstofffilm 34 ausbildbar ist und infolgedessen vorteilhafte Lagereigenschaften, insbesondere eine widerstandsarme Lagerung der rotierenden Lagerkomponente 16. Ebenso wird eine erhöhte mechanische Beanspruchbarkeit gegen Axialkräfte 33 erzielt. Die Axialkraft 33 ist durch eine vertikale Antriebswelle 19 ausübbar, insbesondere zumindest teilweise über deren Eigengewicht. Das Lager 20 ist daher auch als Axialgleitlager 22 aufzufassen. Ebenso wird durch den Schmierstoff 36, der im Bereich der Rastflächen 27 als Schmierstoffverlust 38 austritt, ein erhöhter Wärmestrom 29 aus dem Lager 20 geführt. Insgesamt werden die technischen Vorteile aus dem Ausführungsformen gemäß FIG 1 bis FIG 3 in der Ausführungsform nach FIG 4 in erhöhtem Ausmaß verwirklicht. Die Ausführungsform gemäß FIG 4 bietet diese technischen Vorteile insbesondere bei schnelldrehenden Wellen. Die Wellenanordnung 30 nach FIG 4 ist ebenfalls in ihrem Aufbau in einem Computerprogrammprodukt 60 hinterlegt, so dass deren Betriebsverhalten simulierbar ist. Die Wellenanordnung 30 ist ferner in einem nicht näher dargestellten Getriebe 40 in einer Industrie-Applikation 50 einsetzbar.

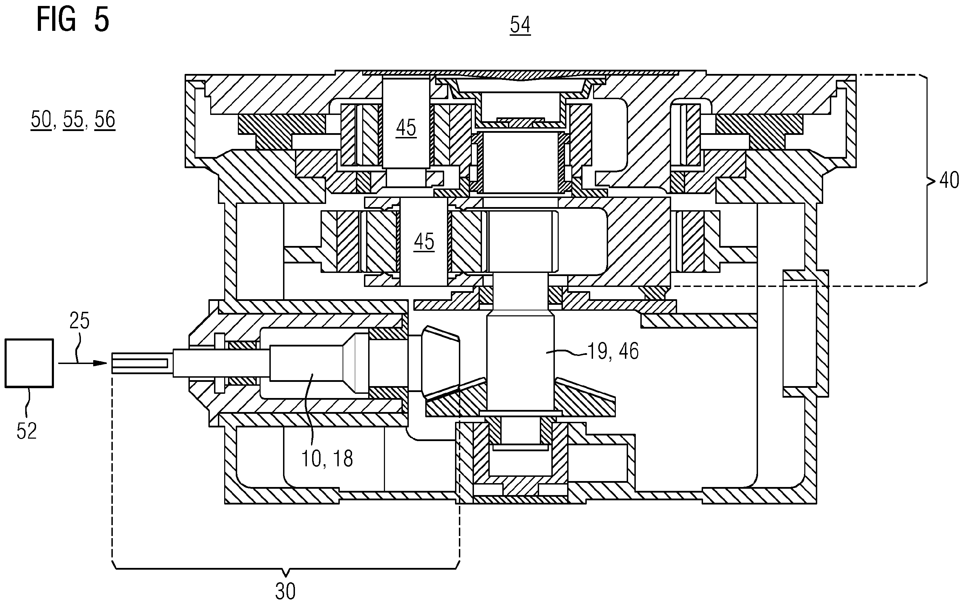

FIG 5 zeigt schematisch den Aufbau einer Ausführungsform einer beanspruchten Industrie-Applikation 50 dargestellt, die über ein Getriebe 40 verfügt. Das Getriebe 40 weist zwei Planetenstufen verfügt. Eine der Planetenstufen 45 ist mit einer Wellenanordnung 30 verbunden, über die eine Antriebsleistung 25 zuführbar ist. Die Antriebsleistung 25 ist über eine Antriebseinheit 52 bereitstellbar. Über das Getriebe 40 ist eine Abtriebseinheit 54 antreibbar, die eine mechanische Anwendung ist. Die Abtriebseinheit 54 ist derart ausgebildet, dass die Industrie-Applikation 50 eine Mühle 55, insbesondere eine Vertikalmühle 56, ist. Die Wellenanordnung 30 ist dabei gemäß einer der oben skizzierten Ausführungsformen ausgebildet. Die Wellenanordnung 30 weist insbesondere eine Welle 10 auf, die als horizontale Antriebswelle 18 ausgebildet ist. Ebenso weist die Industrie-Applikation 50 eine vertikale Antriebswelle 19 auf, die auch durch eine Ausführungsform der beanspruchten Wellenanordnung 30 drehbar lagerbar ist. Die vertikale Antriebswelle 19 stellt für eine der Planetenstufen 45 eine Sonnenwelle 46 dar.

## Patentansprüche

1. Wellenanordnung (30), umfassend eine Welle (10), die durch ein Axialgleitlager (22) mit einer Lagerkomponente (21) abgestützt ist, die bogenförmige Keilflächen (24) umfasst, an denen jeweils in einem radial äußeren Bereich und/oder einem radial inneren Bereich ein Dichtsteg (28) ausgebildet ist, **dadurch gekennzeichnet, dass** die Welle (10) als Welle (10) eines Getriebes (40) einer Industrie-Applikation (50) ausgebildet ist.

2. Wellenanordnung (30) nach Anspruch 1, **dadurch gekennzeichnet, dass** die Welle (10) eine Nenndrehzahl von bis zu 2000 U/min aufweist.

3. Wellenanordnung (30) nach Anspruch 1 oder 2, **dadurch gekennzeichnet, dass** das Axialgleitlager (22) als Radial-Axialgleitlager ausgebildet ist.

4. Wellenanordnung (30) nach einem der Ansprüche 1 bis 3, **dadurch gekennzeichnet, dass** die Industrie-Applikation (50) eine Mühle (55), insbesondere eine Vertikalmühle (56), ein Extruder, ein Kran, ein Bagger oder eine Band-Applikation ist.

5. Wellenanordnung (30) nach einem der Ansprüche 1 bis 4, **dadurch gekennzeichnet, dass** das Axialgleitlager (24) als hydrostatisches Gleitlager oder als hydrodynamisches Gleitlager ausgebildet ist.

6. Wellenanordnung (30) nach einem der Ansprüche 1 bis 5, **dadurch gekennzeichnet, dass** die Welle (10) eine horizontal ausgerichtete Antriebswelle (18) ist oder eine vertikale Antriebswelle (19) einer Planetenstufe (45) des Getriebes (40) ausgebildet ist.

7. Wellenanordnung (30) nach einem der Ansprüche 1 bis 6, **dadurch gekennzeichnet, dass** die Lagerkomponente (21) ein Schmierstoff (36) mit einem Schmierstoffdruck (37) von mindestens 1,0 bar zuführbar ist.

8. Wellenanordnung (30) nach einem der Ansprüche 1 bis 7, **dadurch gekennzeichnet, dass** die Lagerkomponente (21) beidseitig mit bogenförmigen Keilflächen (24) versehen ist, an denen in einem radial äußeren Bereich und/oder radial inneren Bereich ein Dichtsteg (28) ausgebildet ist.

9. Wellenanordnung (30) nach einem der Ansprüche 1 bis 8, **dadurch gekennzeichnet, dass** die Lagerkomponente (21) als stationäre Lagerkomponente (26), als rotierende Lagerkomponente (26) oder als Schwimmscheibe (42) ausgebildet ist.

10. Getriebe (40) für eine Industrie-Applikation (50), das zumindest eine Planetenstufe (45) mit einer antreibenden Sonnenwelle (46) aufweist, die drehbar als Welle (10) in einer Wellenanordnung (30) aufgenommen ist, **dadurch gekennzeichnet, dass** die Wellenanordnung (30) nach einem der Ansprüche 1 bis 9 ausgebildet ist.

11. Industrie-Applikation (50), umfassend eine Antriebseinheit (52) und eine Abtriebseinheit (54), die über ein Getriebe (40) drehmomentübertragend verbunden sind, **dadurch gekennzeichnet, dass** das Getriebe (40) nach Anspruch 10 ausgebildet ist.

12. Computerprogrammprodukt (60) zum Simulieren eines Betriebsverhaltens einer Wellenanordnung (30), die in einem Getriebe (40) eingesetzt ist, **dadurch gekennzeichnet, dass** die Wellenanordnung (30) nach einem der Ansprüche 1 bis 9 ausgebildet ist.
